# EUROPEAN PATENT APPLICATION

(11) **EP 3 181 946 A1**
(43) Date of publication of application: **21.06.2017**
(21) Application number: 15201345.4
(22) Date of filing: 18.12.2015
(51) Int. Cl.: F16F 15/32, G01M 1/32

(54) **SPLICER FOR BELTS OF BALANCING WEIGHTS**

(71) Applicant: WEGMANN automotive GmbH & Co. KG, 97209 Veitshöchheim (DE)
(72) Inventor: Bürgel, Hans-Ulrich, 97849 Roden (DE)
(74) Representative: Lohr, Georg

(57) **Abstract**

An automatic dispenser for balancing weights comprises a transport section and a cutting section. The transport section comprises a transport belt held between a first transport roller and a second transport roller to generate friction to a belt of balancing weights comprising a plurality of individual balancing weight segments in conjunction with a first counter roller. The automatic dispenser further comprises a splicer tool, which enables the connection of the old belt of balancing weights with a new belt of balancing weights with a defined distance.

## Description

### Field of the invention

The invention relates to a splicer for belts or chains of balancing weights for connecting a first and a second belt of balancing weights. Such balancing weights may be used for balancing wheels of vehicles.

For balancing vehicle wheels, balancing weights are used. Self-adhesive balancing weights comprise segments of a mass material, which may be a metal, like zinc or steel, having a self-adhesive tape at one side, by which the mass material may be held to a rim of a wheel. Multiple pieces or segments of such a mass material are held together by the strip of adhesive tape, forming a belt or a belt of balancing weights. The self-adhesive tape is protected by a liner, also called backing at the side opposite to the balancing weight segments. Before applying a balancing weight to a rim, the liner is removed.

US 3,960,409 show such a belt of balancing weights which may have a significant length and which may be wound up to a coil to simplify storage.

EP 1 253 414 A2 discloses a complex dispensing device for balancing weights delivered from a belt of balancing weights which is preferably wound to a roll. Here, the liner is removed from the a adhesive tape at the balancing weights, then sections of balancing weight are cut from the tape and directly fed to an applicator. This device is intended for automatic tire balancing systems.

In case of an empty supply roll of balancing weights a new supply roll has to be inserted into the dispenser. This change of the empty supply roll of balancing weights is a complex process. First, the dispenser has to be stopped, then it has to be opened and the new belt of balancing weights has to be threaded through the dispenser. Finally, the dispenser has to be restarted. At least one test balancing weight should be dispensed to verify the proper operation of the dispenser.

### Summary of the invention

The problem to be solved by the invention is to provide a means and a method for ensuring continuous operation of an automatic dispenser, even, when a roll of balancing weight is empty, thus avoiding time consuming reloading of the dispenser.

A first aspect of the invention relates to a simple and inexpensive tool for connecting two belts of balancing weights. It should allow connection of the belts in a precise distance, even with balancing weights of all common sizes.

Another aspect relates to a method for continuously providing balancing weights to a dispenser over a long period of time, without interruption of the dispensing process for replacing a supply roll.

Solutions of the problem are described in the independent claims. The dependent claims relates to further improvements of the invention.

In a preferred embodiment, a tool for connecting belts of balancing weights, also called herein a splicer, comprises a support table for the belts of balancing weights. The support table defines a longitudinal axis and has a support surface for bearing the belts of balancing weights. On a first longitudinal side of the support table and above the support surface is a first guide for abutting or aligning the belt of balancing weights. Furthermore, the support table may comprise a spacer. The spacer may protrude from the support surface of the support table. The spacer may be oriented perpendicular to the longitudinal axis. It preferably may be located at the center or in the middle of the support surface. Dependent on the type of belt of balancing weights, the spacer may have different heights and widths. The spacer should fit into the space between two neighboring balancing weight segments. The spacer may be a bar, a wedge shaped profile or may have any different form. Preferably it has a thickness corresponding to the distance between adjacent balancing weights. The spacer ensures a precise distance between the balancing weights. At a belt of balancing weights, the individual balancing weights are slightly spaced apart from each other and held in their position by the adhesive tape. This allows a better flexing or bending of the belt and simplifies processing by the automatic dispenser. Most automatic dispenser rely on the spacing for detecting and moving of balancing weights. Some dispensers simply measure the length of the belt passing to determine the delivered mass. Therefore, precise spacing is critical. The spacer may also be spring loaded, such that it can move towards or even slide into the support surface. This may avoid damaging or scratching of balancing weights.

The splicer may have a second guide at a second longitudinal side and above the support surface, which is parallel to the first guide. The second guide preferably is spring loaded into a direction towards the first guide for holding or clamping the balancing weights between the first guide and the second guide.

In a preferred embodiment, the second guide may be held with a fist and a second bolt to the support table. Between the heads of the bolts and the second guide there may be at least one compression or tension spring, which generates force on the second guide and move the second guide towards the first guide. Therefore the second guide may be spring loaded. This configuration enables to use belts of different width and or to fix the first and the second belt of balancing weights by springforce.

Preferably the second guide as a distance to the first guide adapted to the width of at least one belt of balancing weights.

In another preferred embodiment, the support table may have a U-shape to enhance the mechanical stability. The support surface may be provided with rolls, which protrude over the support surface and facilitate the handling of the belts of balancing weights.

In another preferred embodiment, the first guide may have an angled profile. A first leg of the profile may be fixed to the support table by screws, welded, glued or riveted. A second leg may be parallel to the support surface and provides a guide for the belt of balancing weights. It preferably is oriented towards the second longitudinal side. Preferably the second leg of the first guide creates a gap to the support surface. This leads to an improved guidance of different types of belts of balancing weights with different heights.

In another preferred embodiment, the spacer may be a removable inset, fixed in a breakthrough in the support surface of the support table. The inset may be fixed in a breakthrough of the support table with at least two screws or another mechanism. The inset may have a spacer in a perpendicular direction to the motion direction, which is along the longitudinal axis, of the belt of balancing weights.

In another preferred embodiment, the second guide may have an angled profile. A first leg of the profile may be fixed to the support table by screws, welded, glued or riveted. A second leg may be parallel to the support surface and provides a guide for the belt of balancing weights. It preferably is oriented towards the first longitudinal side. Preferably, the second leg of the second guide creates a gap to the support surface. The second leg of the second guide may have at least one breakthrough perpendicular to the movement direction of the belt of balancing weights in order to be able to remove a jammed belt with a tool for example a screwdriver.

Furthermore, the splicer may comprise a bracket or a fastener for installation to the dispenser or a wall or any other part next to the dispenser. The bracket may be an extra component which is screwed, welded, glued or riveted to the support table or which may be part thereof.

In a preferred embodiment, the splicer may comprise a first tensioning unit and a second tensioning unit which may be attached to the first guide, the second guide or to the support table. The first tensioning unit may comprise a first clamping lever, a first tensioner and a first retaining plate. The second tensioning unit may comprise a second clamping lever, a second tensioner and a second retaining plate. The first and the second clamping lever may be used to generate tensioning force by the first and the second tensioner via a pivoting mechanism to the first and second belt of balancing weights. If one of clamping levers may be opened it may be swung open and the first or the second belt of balancing weights will be unlocked. The first and second retaining plate may be used as a retainer for the liner covering the adhesive tape.

The splicer may also be used without a balancing weight dispenser.

Another aspect of the invention relates to a method for connecting a fist belt of balancing weights to a second belt of balancing weights by using a splicer as mentioned above.

The splicer allows connecting the belts of balancing weights, such that there may be a predetermined space between a last balancing weight of a first belt of balancing weights and a first balancing weight of a second belt of balancing weights. This may result in a constant spacing of balancing weights and allows a continuous operation of an attached dispenser.

The first belt of balancing weights is placed on the support table of the splicer such that the end of the first belt of balancing weights may abut or align with a first side of the spacer and a longitudinal side of the first belt of balancing weights it is preferably abutted or aligned to a first guide.

The second belt of balancing weights is placed on the support table of the splicer such that the end of the second belt of balancing weights may abut or align with a second side of the spacer and a longitudinal side of the second belt of balancing weights is preferably abutted or aligned to the first guide. It is further preferred to hold the belt of balancing weights between the first guide and the second guide.

These steps may be exchanged in their sequence or executed at the same time.

Finally, the liner may be removed and both belts of balancing weights will be connected with a piece of adhesive tape.

The adhesive tape may remain on the belt of balancing weights.

A further embodiment relates to a dispenser which may comprise a transport section and a cutting section. The transport section is for transporting a belt of balancing weights to provide a certain amount of balancing weight segments, which are cut off the tape by the cutting section. The transport section may comprise at least one transport belt, which preferably is driven by a first transport roller and a second transport roller. The transport belt generates friction to the belt of balancing weights, and therefore transports the balancing weight segments to the cutting section.

Preferably, the belt of balancing weight segments comprises a plurality of balancing weight segments, which are held together by an adhesive tape for attaching the balancing weight segments to a rim of a wheel. The cutting section cuts pieces of a required size with a specific number of balancing weight segments from the belt of balancing weights.

It is further preferred, if there is a backing or liner to protect the adhesive surface of the adhesive tape opposing to the balancing weights.

It is further preferred, if the adhesive tape has at least one strengthening layer to increase the shear strength of the belt to simplify transport by the transport section.

Preferably, the belt of balancing weights is wound to a coil, which supplies the transport section.

The dispenser may have a splicer, which enables to connect a first belt of balancing weights and a second belt of balancing weights. In an alternative embodiment the splicer may be attached to the dispenser.

### Description of Drawings

In the following, the invention will be described by way of example, without limitation of the general inventive concept, on examples of embodiment with reference to the drawings.
- Figure 1: shows a preferred embodiment.
- Figure 2: shows a preferred embodiment with f balancing weights.
- Figure 3: shows a side view.
- Figure 4: shows another side view.
- Figure 5: shows a top view.
- Figure 6: shows a top view with two belts of balancing weights.
- Figure 7: shows a view from bottom side.
- Figure 8: discloses a structural diagram with a dispenser.
- Figure 9: shows another preferred embodiment.
- Figure 10: shows another preferred embodiment.

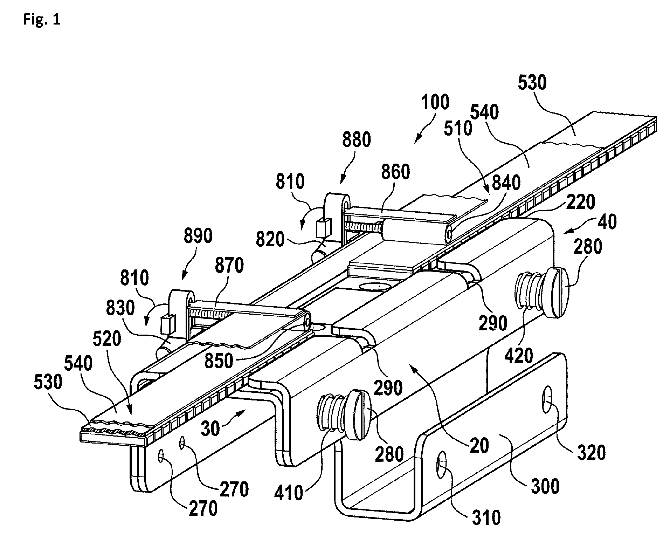

In Figure 1, a preferred embodiment of the splicer 100 is disclosed. The splicer comprises a support table 200. The support table 200 has a support surface 230 as support for bearing at least one belt of balancing weights. The support surface 230 is designed to build a centering track together with a fist guide 210 on the fist longitudinal side 10 extending above the longitudinal side and a second guide 220 on the second longitudinal side 20. The first guide 210 may have an angled profile forming a first leg 211 and a second leg 212. The first guide 210 may be fixed with its first leg 211 to the support table 200 on the fist longitudinal side 10. The second leg 212 may be parallel to the support surface 230 and provides a first fixed stop for abutting or aligning the belt of balancing weights. The second leg 212 preferably is oriented towards the second longitudinal side 20. The second leg 212 of the first guide 210 may form a gap 330 to the support surface 230.

The second guide 220 may have an angled profile forming a first leg 221 and a second leg 222. The second guide 220 may be fixed with its first leg 221 to the support table 200 on the second longitudinal side 20. A second leg 222 may be parallel to the support surface 230 and extending above the longitudinal side and provides a second fixed stop for the belt of balancing weights. The second leg 222 preferably is oriented towards the first longitudinal side 10. The second leg 222 may form a gap 330 to the support surface 230.

The second guide 220 may be attached movable and may be spring loaded, for example with a first compression spring 410 and a second compression spring 420 to the support table 200. The second guide is attached with a fist guide bolt 270 and a second guide bolt 280. Between the heads of the first bolt 270 and the second guide bolt 280 and the outer surface of the second guide 220 a first compression spring 410 and a second compression spring 420 which push the second guide 220 towards the support table 200 may be located. The second guide 220 may have at least one incision 290, perpendicular to the longitudinal axis 50. Such incisions may be used for removing a jammed belt of balancing weights with a tool for example a screwdriver.

Preferably the second guide 220 has a distance to the first guide 210 adapted to the width of at least one belt of balancing weights 510, 520.

The splicer 100 may further comprise a bracket or fastener 300 for attaching the splicer 100 to a dispenser. The fastener may have a first hole 310 and a second hole 230. The bracket or the fastener 300 may have a U-shape. The bracket or fastener 300 may be firmly bonded or screwed to support table 200 or be a part of the support table 200.

The splicer 100 may further comprise a first transverse side 30 and opposing thereto a second transverse side 40.

The splicer 100 further comprises a first tensioning unit 880 and second tensioning unit 890 which may be attached to the first guide 210 or to the support table 200. The first and the second tensioning unit 880, 890 may comprise a first and a second clamping lever 820, 830, a first and a second tensioner 840, 850 and a first and a second retaining plate 860, 870. The first and the second clamping lever 820, 830 may be used to generate tension force with the first and the second tensioner 840, 850 via a pivoting mechanism to the first and second belt of balancing weights 510, 520. If one of the clamping levers 820, 830 may be opened it may be swung open in the turn direction 810 and the first or the second belt of balancing weights 510, 520 will be unlocked. The first and second retaining plate 860, 870 may be used as a retainer for the liner 540 covering the adhesive tape 530 of the first and the second belt of balancing weights 510, 520. The adhesive tape 530 preferably remains on the belt of balancing weights 510, 520.

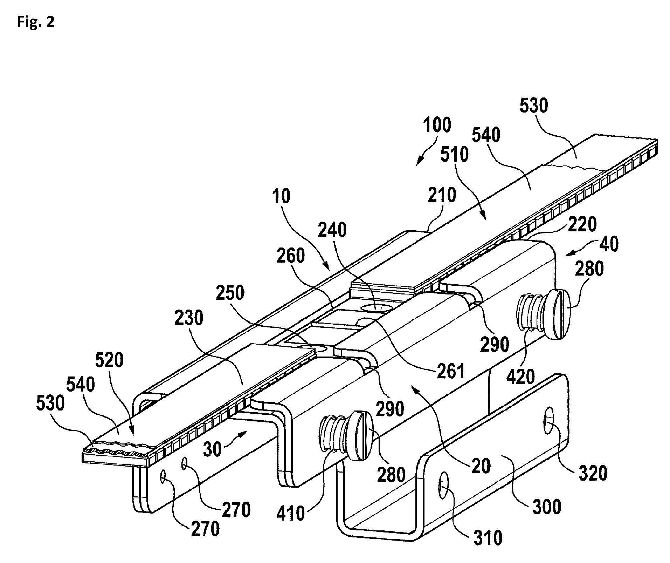

In Figure 2, a preferred embodiment of the invention of figure 1 is shown with balancing weights. The splicer 100 is loaded with a first belt of balancing weights 510 and a second belt of balancing weights 520. The belts are pushed against the fist guide 210 by the second guide 220, which may be springloaded by the first compression spring 410 and the second compression spring 420. The fist belt 510 will be abutted on the spacer 261 from a first side and the second belt 520 from a second side so that the spacer 261 generates a defined distance between the first belt of balancing weights 510 and the second belt of balancing weights 520.

The first belt of balancing weights 510 and the second belt of balancing weights comprise a liner 540 and an adhesive tape 530.The holes 270 may be used for attaching the first guide 210 to the support table 200.

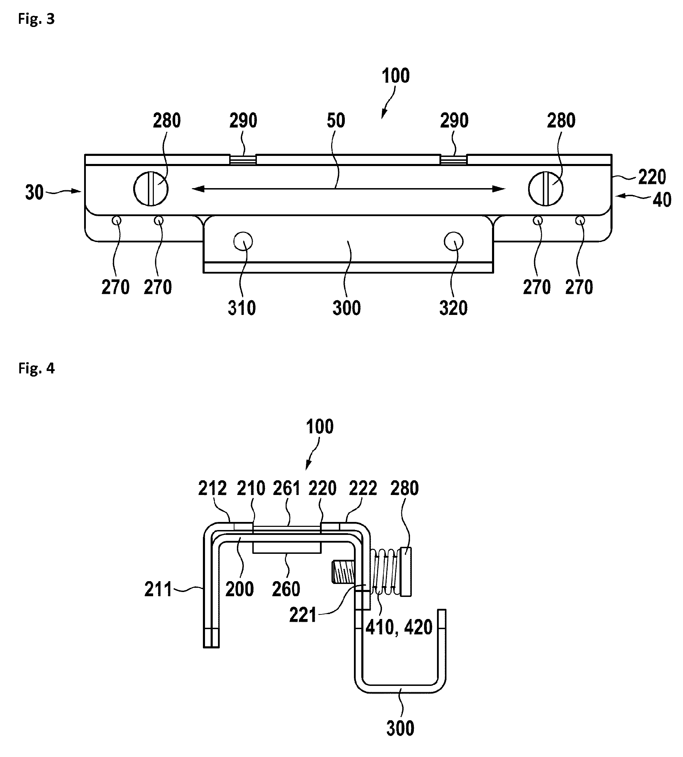

In Figure 3, a side view of a first embodiment is shown. The picture discloses the first guide bolt 280 and the second guide bolt 280 the bracket or the fastener 300 with a first hole 310 and a second hole 320. The second guide 220 has two incisions 290. It may have any different number of incisions.

In Figure 4, another side view of the splicer is disclosed. The spacer 261 protrudes over the support surface 230 of the support table 200. Furthermore, the inset 260 is disclosed.

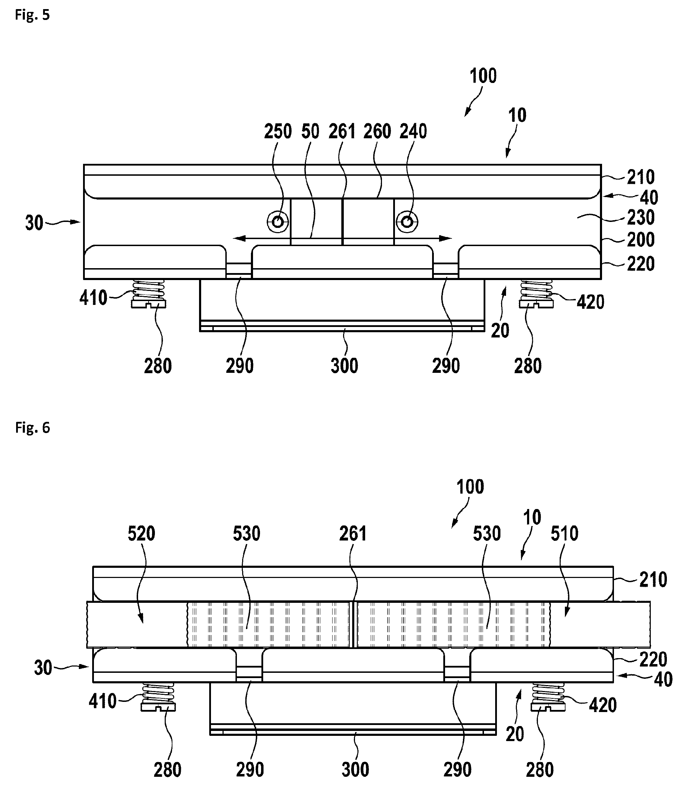

In Figure 5, a top view of the splicer 100 is shown.

In Figure 6, a top view of the splicer 100 with a belt of balancing weights is shown. The belts of balancing weights are not aligned to the spacer 261. Alinement may be done by pushing the fist belt of balancing weights 510 to the first side of the spacer 261 and the second belt of balancing weights 520 to second side of the spacer 261.

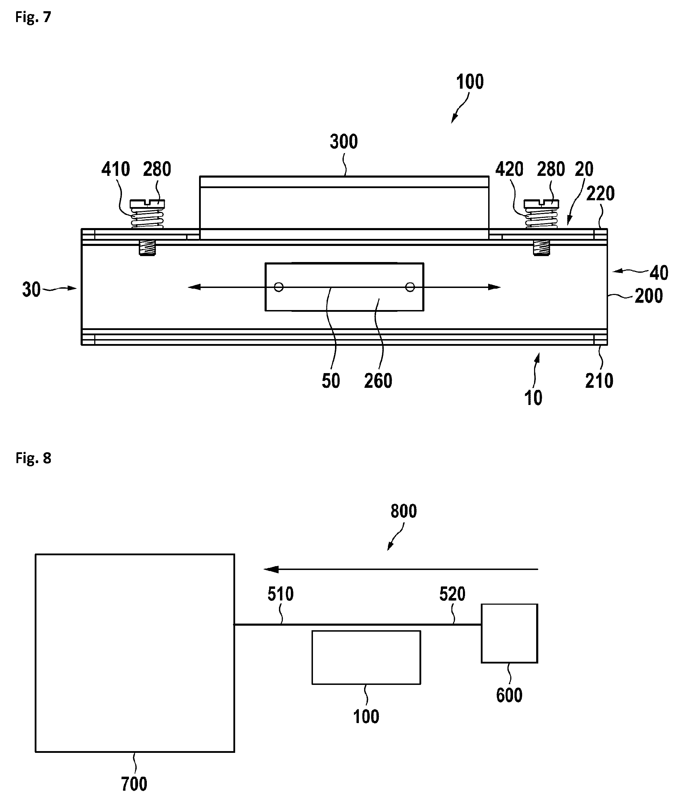

In Figure 7 discloses a view from below of the splicer 100 is shown.

Figure 8 discloses a process diagram with a dispenser 700, a supply roll of balancing weights 600, a splicer 100, a first belt of balancing weights 510, a second belt of balancing weights 520 and a motion direction 800 for the belts of balancing weights.

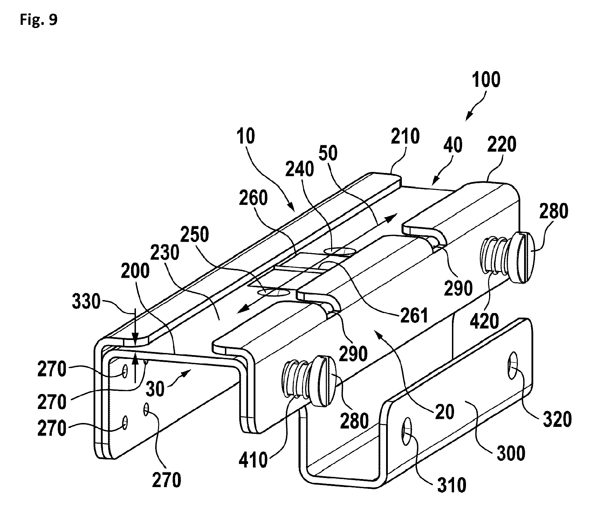

Figure 9 discloses an embodiment of the splicer 100 is disclosed. The splicer comprises a support table 200. The support table 200 has a support surface 230 as support for bearing at least one belt of balancing weights. The support surface 230 is designed to build a centering track together with a fist guide 210 on the first longitudinal side 10 extending above the longitudinal side and a second guide 220 on the second longitudinal side 20. The first guide 210 may have an angled profile forming a first leg 211 and a second leg 212. The first guide 210 may be fixed with its first leg 211 to the support table 200 on the first longitudinal side 10. The second leg 212 may be parallel to the support surface 230 and provides a first fixed stop for abutting or aligning the belt of balancing weights. The second leg 212 preferably is oriented towards the second longitudinal side 20. The second leg 212 of the first guide 210 may form a gap 330 to the support surface 230.

The second guide 220 may have an angled profile forming a first leg 221 and a second leg 222. The second guide 220 may be fixed with its first leg 221 to the support table 200 on the second longitudinal side 20. A second leg 222 may be parallel to the support surface 230 and extending above the longitudinal side and provides a second fixed stop for the belt of balancing weights. The second leg 222 preferably is oriented towards the first longitudinal side 10. The second leg 222 may form a gap 330 to the support surface 230.

Furthermore, the support table comprises a spacer 261, which may be attached to an inset 260 in a perpendicular direction to the motion direction 800, which is along the longitudinal axis 50, of the belt of balancing weights. The spacer extending above the support surface into the space above the support surface. The inset 260 may be fixed in a breakthrough of the support surface 230, of the support table 200, with at least two screws 240/250. The spacer 261 may be formed as a bar, which is attached to the inset 260 and protrudes from the support surface 230 of the support table 200.

The second guide 220 may be attached movable and may be spring loaded, for example with a first compression spring 410 and a second compression spring 420 to the support table 200. The second guide is attached with a fist guide bolt 270 and a second guide bolt 280. Between the heads of the first bolt 270 and the second guide bolt 280 and the outer surface of the second guide 220 a first compression spring 410 and a second compression spring 420 which push the second guide 220 towards the support table 200 may be located. The second guide 220 may have at least one incision 290, perpendicular to the longitudinal axis 50. Such incisions may be used for removing a jammed belt of balancing weights with a tool for example a screwdriver.

Preferably the second guide 220 has a distance to the first guide 210 adapted to the width of at least one belt of balancing weights 510, 520.

The splicer 100 may further comprise a bracket or fastener 300 for attaching the splicer 100 to a dispenser. The fastener may have a first hole 310 and a second hole 230. The bracket or the fastener 300 may have a U-shape. The bracket or fastener 300 may be firmly bonded or screwed to support table 200 or be a part of the support table 200.

The splicer 100 may further comprise a first transverse side (30) and opposing thereto a second transverse side 40.

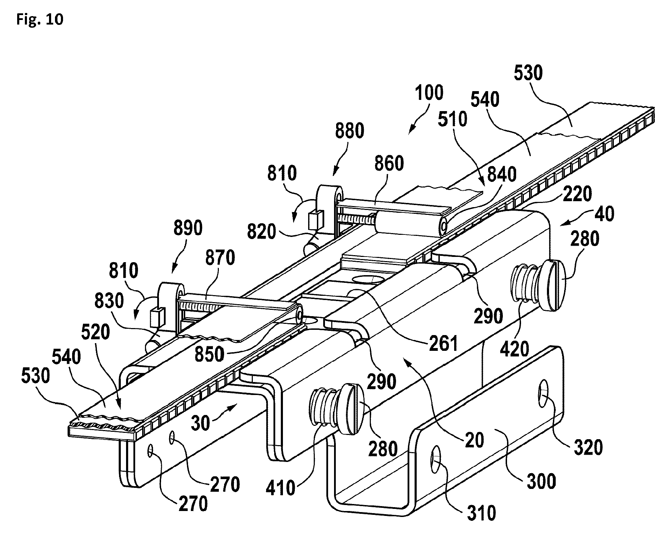

Figure 10 discloses an embodiment of the splicer 100 is disclosed. The splicer comprises a support table 200. The support table 200 has a support surface 230 as support for bearing at least one belt of balancing weights. The support surface 230 is designed to build a centering track together with a fist guide 210 on the first longitudinal side 10 extending above the longitudinal side and a second guide 220 on the second longitudinal side 20. The first guide 210 may have an angled profile forming a first leg 211 and a second leg 212. The first guide 210 may be fixed with its first leg 211 to the support table 200 on the first longitudinal side 10. The second leg 212 may be parallel to the support surface 230 and provides a first fixed stop for abutting or aligning the belt of balancing weights. The second leg 212 preferably is oriented towards the second longitudinal side 20. The second leg 212 of the first guide 210 may form a gap 330 to the support surface 230.

The second guide 220 may have an angled profile forming a first leg 221 and a second leg 222. The second guide 220 may be fixed with its first leg 221 to the support table 200 on the second longitudinal side 20. A second leg 222 may be parallel to the support surface 230 and extending above the longitudinal side and provides a second fixed stop for the belt of balancing weights. The second leg 222 preferably is oriented towards the first longitudinal side 10. The second leg 222 may form a gap 330 to the support surface 230.

Furthermore, the support table comprises a spacer 261, which may be attached to an inset 260 in a perpendicular direction to the motion direction 800, which is along the longitudinal axis 50, of the belt of balancing weights. The spacer extending above the support surface into the space above the support surface. The inset 260 may be fixed in a breakthrough of the support surface 230, of the support table 200, with at least two screws 240, 250. The spacer 261 may be formed as a bar, which is attached to the inset 260 and protrudes from the support surface 230 of the support table 200.

The second guide 220 may be attached movable and may be spring loaded, for example with a first compression spring 410 and a second compression spring 420 to the support table 200. The second guide is attached with a fist guide bolt 270 and a second guide bolt 280. Between the heads of the first bolt 270 and the second guide bolt 280 and the outer surface of the second guide 220 a first compression spring 410 and a second compression spring 420 which push the second guide 220 towards the support table 200 may be located. The second guide 220 may have at least one incision 290, perpendicular to the longitudinal axis 50. Such incisions may be used for removing a jammed belt of balancing weights with a tool for example a screwdriver.

Preferably the second guide 220 has a distance to the first guide 210 adapted to the width of at least one belt of balancing weights 510, 520.

The splicer 100 may further comprise a bracket or fastener 300 for attaching the splicer 100 to a dispenser. The fastener may have a first hole 310 and a second hole 230. The bracket or the fastener 300 may have a U-shape. The bracket or fastener 300 may be firmly bonded or screwed to support table 200 or be a part of the support table 200. The splicer 100 may further comprise a first transverse side 30 and opposing thereto a second transverse side 40.

The splicer 100 further comprises a first tensioning unit 880 and second tensioning unit 890 which may be attached to the first guide 210 or to the support table 200. The first and the second tensioning unit 880, 890 may comprise a first and a second clamping lever 820, 830, a first and a second tensioner 840, 850 and a first and a second retaining plate 860, 870. The first and the second clamping lever 820, 830 may be used to generate tension force with the first and the second tensioner 840, 850 via a pivoting mechanism to the first and second belt of balancing weights 510, 520. If one of the clamping levers 820, 830 may be opened it may be swung open in the turn direction 810 and the first or the second belt of balancing weights 510, 520 will be unlocked. The first and second retaining plate 850, 860 may be used as a retainer for the liner 540 covering the adhesive tape 530 of the first and the second belt of balancing weights 510, 520. The adhesive tape 530 remains on the belt of balancing weights 510, 520.

### List of reference numerals

- 10: First longitudinal side
- 20: Second longitudinal side
- 30: First transverse side
- 40: Second transverse side
- 50: longitudinal axis
- 100: Splicer
- 200: Support table
- 210: First guide
- 211: First leg
- 212: Second leg
- 220: Second guide
- 221: First leg
- 222: Second leg
- 230: Support surface
- 240: Fist hole
- 250: Second hole
- 260: Inset
- 261: Spacer
- 270: Holes
- 280: First guide bolt
- 280: Second guide bolt
- 290: Incisions
- 300: Bracket / Fastener
- 310: First hole
- 320: Second hole
- 330: Gap
- 410: First compression spring
- 420: Second compression spring
- 510: First belt of balancing weights
- 520: Second belt of balancing weights
- 530: Adhesive tape
- 540: Liner
- 600: Supply roll of balancing weights
- 700: Dispenser
- 800: Motion direction
- 810: Turn direction
- 820: First clamping lever
- 830: Second clamping lever
- 840: First tensioner
- 850: Second tensioner
- 860: First retaining plate
- 870: Second retaining plate
- 880: First tensioning unit
- 890: Second tensioning unit

## Claims

1. A splicer (100) for belts of balancing weights (510, 520) comprising:
a support table (200) having a support surface (230) for bearing at least one belt of balancing weights (510, 520), the support table (200) having a first longitudinal side (10) and opposing thereto a second longitudinal side (20),
a fist guide (210) at the first longitudinal side (10) of the support table (200), defining a longitudinal axis (50) parallel to the first longitudinal side and extending above the support surface (230),

2. A splicer (100) according to claim 1
**characterized in, that**
a spacer (261), perpendicular to the longitudinal axis, protruding from the support surface (230) is provided.

3. A splicer (100) according to any one of the previous claims
**characterized in that**
a second guide (220) extending above the support surface (230) of the support table (200), and parallel to the longitudinal axis (50) is provided.

4. A splicer (100) according to claim 3
**characterized in, that**
the second guide (220) is spring loaded.

5. A splicer (100) according to claim 3 or 4
**characterized in, that**
the second guide (220) has a distance to the first guide (210) adapted to the width of at least one belt of balancing weights (510, 520).

6. A splicer (100) according to any one of claims 2 to 5
**characterized in, that**
the spacer (261) is next to the center of the support surface (230).

7. A splicer (100) according to any one of claims 2 to 6
**characterized in, that**
the spacer (261) is attached to a removable inset (260).

8. A splicer (100) according to any one of claims 2 to 7,
**characterized in, that**
the thickness of the spacer (261) corresponds to the distance between adjacent balancing weights of the belts of balancing weights (510, 520).

9. A splicer (100) according to any one of claims 2 to 8
**characterized in, that**
a first tensioning unit (880) and a second tensioning unit (890) are provided.

10. A splicer (100) according to claim 9
**characterized in, that**
the first tensioning unit (880) and/or the second tensioning unit (890) are attached to the first guide (210) or to the second guide (220) or to the support table (200).

11. A splicer (100) according to claim 9
**characterized in, that**
the first tensioning (880) unit comprises a first clamping lever (820), a first tensioner (840) and a first retaining plate (860) and/or the second tensioning unit (890) comprises a second clamping lever (830), a second tensioner (850) and a second retaining plate (870).

12. Automatic dispenser for balancing weights comprising:
a transport section for transporting belts of balancing weights,
a cutting section for cutting pieces of the belt of balancing weights, and
a splicer (100) according to any one of the previous claims.

13. Method of splicing belts of balancing weights comprising the steps of:
providing a splicer (100) according to any one of claims 1 to 10,
providing a fist belt of balancing weights (510) at the support surface (230) and aligned with first guide (210),
providing a second belt of balancing weights (520) at the support surface (230) and aligned with first guide (210) opposing to the fist belt of balancing weights (510),
connecting the fist belt of balancing weights (510) and the second belt of balancing weights (520) with an extra piece of adhesive tape by attaching the extra piece of adhesive tape (530) to the first belt of balancing weights (510) and the second belt of balancing weights (520).

14. Method of splicing belts of balancing weights according to claim 13:
abutting or aligning the first belt of balancing weights (510) to a first side of the spacer (261),
abutting or aligning the second belt of balancing weights (520) to a second side of the spacer (261),

15. Method according to any one of claims 13 or 14, further comprising the step of:
moving the second guide (220) of claim 2 to hold the belts of balancing weights between the first guide (210) and the second guide (220) before connecting the first belt of balancing weights (510) and the second belt of balancing weights (520).

## Amended claims

### Amended claims in accordance with Rule 137(2) EPC.

1. A splicer (100) for belts of balancing weights (510, 520) comprising:
a support table (200) having a support surface (230) for bearing at least one belt of balancing weights (510, 520), the support table (200) having a first longitudinal side (10) and opposing thereto a second longitudinal side (20),
a fist guide (210) at the first longitudinal side (10) of the support table (200), defining a longitudinal axis (50) parallel to the first longitudinal side and extending above the support surface (230),
**characterized in, that**
a spacer (261), perpendicular to the longitudinal axis, protruding from the support surface (230) is provided.

2. A splicer (100) according to any one of the previous claims
**characterized in that**
a second guide (220) extending above the support surface (230) of the support table (200), and parallel to the longitudinal axis (50) is provided.

3. A splicer (100) according to claim 2
**characterized in, that**
the second guide (220) is spring loaded.

4. A splicer (100) according to claim 2 or 3
**characterized in, that**
the second guide (220) has a distance to the first guide (210) adapted to the width of at least one belt of balancing weights (510, 520).

5. A splicer (100) according to any one of claims 1 to 4
**characterized in, that**
the spacer (261) is next to the center of the support surface (230).

6. A splicer (100) according to any one of claims 1 to 5
**characterized in, that**
the spacer (261) is attached to a removable inset (260).

7. A splicer (100) according to any one of claims 1 to 6,
**characterized in, that**
the thickness of the spacer (261) corresponds to the distance between adjacent balancing weights of the belts of balancing weights (510, 520).

8. A splicer (100) according to any one of claims 1 to 7
**characterized in, that**
a first tensioning unit (880) and a second tensioning unit (890) are provided.

9. A splicer (100) according to claim 8
**characterized in, that**
the first tensioning unit (880) and/or the second tensioning unit (890) are attached to the first guide (210) or to the second guide (220) or to the support table (200).

10. A splicer (100) according to claim 8
**characterized in, that**
the first tensioning (880) unit comprises a first clamping lever (820), a first tensioner (840) and a first retaining plate (860) and/or the second tensioning unit (890) comprises a second clamping lever (830), a second tensioner (850) and a second retaining plate (870).

11. Automatic dispenser for balancing weights comprising:
a transport section for transporting belts of balancing weights,
a cutting section for cutting pieces of the belt of balancing weights, and
a splicer (100) according to any one of the previous claims.

12. Method of splicing belts of balancing weights comprising the steps of:
providing a splicer (100) according to any one of claims 1 to 10,
providing a fist belt of balancing weights (510) at the support surface (230) and aligned with first guide (210),
providing a second belt of balancing weights (520) at the support surface (230) and aligned with first guide (210) opposing to the fist belt of balancing weights (510),
connecting the fist belt of balancing weights (510) and the second belt of balancing weights (520) with an extra piece of adhesive tape by attaching the extra piece of adhesive tape (530) to the first belt of balancing weights (510) and the second belt of balancing weights (520).

13. Method of splicing belts of balancing weights according to claim 12:
abutting or aligning the first belt of balancing weights (510) to a first side of the spacer (261),
abutting or aligning the second belt of balancing weights (520) to a second side of the spacer (261),

14. Method according to any one of claims 12 or 13, further comprising the step of:
moving the second guide (220) of claim 2 to hold the belts of balancing weights between the first guide (210) and the second guide (220) before connecting the first belt of balancing weights (510) and the second belt of balancing weights (520).
